# EUROPEAN PATENT SPECIFICATION

(11) **EP 3 031 686 B1**
(45) Date of publication and mention of the grant of the patent: **19.02.2020**
(21) Application number: 14196721.6
(22) Date of filing: 08.12.2014
(51) Int. Cl.: B60W 30/00, B60W 30/14

(54) **A method for controlling the performance of a vehicle and a vehicle performance control device**
Verfahren zur Steuerung der Leistung eines Fahrzeugs und Fahrzeugleistungssteuerungsvorrichtung
Procédé et dispositif de contrôle des performances d'un véhicule

(43) Date of publication of application: 15.06.2016
(73) Proprietor: Volvo Car Corporation, 40531 Göteborg (SE)
(72) Inventor: Edgren, Claes, 46154 Trollhättan (SE); Landfors, Per, 42243 Hisings Backa (SE)
(74) Representative: Valea AB

(56) References cited:
- EP-A2- 1 780 089
- DE-A1-102011 112 382
- US-A1- 2010 235 030
- US-A1- 2011 005 486
- US-A1- 2014 272 810

## Description

### TECHNICAL FIELD

The present invention relates to a method for controlling the performance of a vehicle and a vehicle performance control device, it also concerns a computer readable storage medium. The method and device permits a vehicle driver to record data and subsequently use that data to impose restrictions to the vehicle performance when revisiting the geographical position at which the data was recorded.

### BACKGROUND

A vehicle driver which manually operates a vehicle runs the risk of being distracted by the constant flow of traffic information. This has led to numerous driving assisting devices adapted to assist the vehicle driver of a vehicle. One specific problem which a vehicle driver may face is to maintain a selected speed i.e. to avoid unintentionally increasing or decreasing the selected speed. When driving a vehicle, the vehicle drivers attention may stray or be captured by a specific traffic situation requiring the driver's imminent attention for example. One common problem, from a safety perspective and from a legal perspective, is that a vehicle driver may unintentionally increase the speed. This problem has become more and more prominent as the vehicles become more and more comfortable and stable at high speeds. Diversions like the just mentioned above could cause serious disruptions in the traffic flow and thus in the end jeopardize the safety of the road-users, including the safety of the vehicle passengers themselves.

The document DE 10 2011 112 382 A1 discloses a method for controlling a vehicle performance. The published French patent application no. FR2989048A3 disclose a speed limiting device for vehicles. The speed limiting device is based on an optical system arranged on the vehicle which detects speed regulations for certain road sections. The speed limiting device will decrease the speed in accordance with the detected speed regulations.

The published patent application no. GB2497600A discloses a configurable traffic zone control system with a transmitter in a traffic zone. The transmitter can transmit a wireless signal indicative of a speed limit of the traffic zone. A receiver structure is provided in a vehicle for receiving the wireless signal. Based on the wireless signal the speed of the vehicle can be automatically controlled to be at, or below, the speed requirement while the vehicle is in the mentioned traffic zone. The wireless signal may be transmitted by cellular communication. The control system may also use GPS.

The above systems and devices take no or little consideration to the vehicle driver's own traffic perception, driving- condition or style. It may be that geographical positions which are deemed important by a third person are not important or relevant for the vehicle driver and vice versa. Hence there is a need for a method and a device which can take the vehicle driver's considerations into account when imposing restrictions to the vehicle.

### SUMMARY

It is an objective of the present invention to provide for a solution, or to at least partly provide for a solution, to the above mentioned drawbacks, or to at least provide a useful alternative. The objective is at least partly met by a method for controlling a vehicle's performance when driving. The method comprises the steps of recording a vehicle's position and at least one vehicle parameter when the vehicle is moving and imposing a restriction on a vehicle's performance when driving the vehicle at, or substantially at, the recorded position using the at least one recorded vehicle parameter.

The objective is also at least partly met by a vehicle performance control device comprising a recording unit adapted to record the vehicle position and at least one vehicle parameter. The vehicle performance control device is configured to impose a restriction on the vehicle's performance when driving the vehicle at, or substantially at, the recorded position using the at least one recorded vehicle parameter.

A person, who may or may not be the driver of the vehicle, may like to impart restrictions to the vehicles performance at one or more selected geographical positions. The geographical position can be a specific location, a region or sections of a route for example. A vehicle driver may want to impose speed limit restrictions to one or more vehicles for example. One vehicle driver can drive a selected route and continuously record the position and at least one vehicle parameter, such as the vehicle speed, which thereafter are imposed as a restriction on the same vehicle, or another vehicle, or one or more vehicles. It is preferred that the method for controlling a vehicles performance when driving comprises the steps of; recording said vehicle's position and at least one vehicle parameter when said vehicle is moving a distance and imposing a restriction on said vehicles performance when driving said vehicle at, or substantially at, said recorded position using said at least one recorded vehicle parameter.

The method and the device provide a very versatile, user friendly way of providing e.g. a speed limit to the vehicle by recording the vehicle driver's own driving profile or pattern. It permits the actual vehicle driver to adapt the performance of the vehicle by imposing restrictions to the vehicle performance based on the vehicle driver's own driving. The vehicle driver's driving profile can be automatically repeated, or used to provide maximum and/or minimum limits to a vehicle parameter, at the same position the second time the vehicle driver passes the same location, i.e. when the vehicle driver revisits the geographical position at which the data was recorded.

This enables a driver to selectively record the driving profile, i.e. the vehicles positon and a vehicle parameter, and apply it at will at selected positions using the vehicle performance control device. It can reduce or remove the need for unwanted third party systems to impart restrictions to the vehicle and the vehicle systems. While driving, the vehicle driver can set a maximum speed limit that is valid only for a selected section of the route for example. That can be done by recording a vehicle parameter such as the vehicle's actual speed profile for the selected route section, or selecting a desired speed limit value. The stored speed limits are then applied automatically the next time the vehicle is driving the same section of the route. This enables a vehicle driver to pinpoint the subjectively most important stretches where the vehicle driver thinks that a restriction such as a speed limitation is imperative. Such stretches could be sharp curves, low-speed zones e.g. near schools, construction sites, low quality road sections to mention a few.

The vehicles position and at least one vehicle parameter can be recorded by a vehicle driver. The vehicle driver can be driving the vehicle or be supervising the movement of the vehicle remotely or locally. Hence the vehicle itself can be an autonomous vehicle or a vehicle adapted to be driven by the vehicle driver, or combinations thereof. The recording can be a continuous recording of the vehicles position and/or the at least one vehicle parameter. A vehicle driver which is actually driving the vehicle can be the most appropriate person to determine when the vehicle is driven in the most appropriate way with respect to the geographical position of the vehicle or, at least with respect to the drivers own intentions and whishes with respect to the geographical position of the vehicle. It thus becomes a safe way of providing the vehicle with restrictions by permitting the driver to record the vehicle position and at least one selected vehicle parameter at the vehicle drivers own will.

The vehicle parameter can be one or more vehicle parameters selected from the list of; acceleration- or retardation levels (lateral and/or longitudinal with respect to the vehicle), speed, revolutions/min, outgoing engine torque, suspension specific parameter, steering wheel angle, or combinations thereof. According to one aspect, the vehicle parameter is a vehicle parameter which relates to the propulsion, steering and/or speed of the vehicle. One preferred vehicle parameter is the vehicle speed.

The imposed restriction on the vehicles performance can be a maximum and/or minimum limit, such as a maximum and/or minimum speed, a maximum and/or minimum revolutions/min, a maximum and/or minimum outgoing engine torque, a maximum and/or minimum suspension specific parameter, a maximum and/or minimum steering wheel angle, or combinations thereof. Maximum limits may be advantageous when wanting to prevent a vehicle driver to exceed a selected parameter such as to prevent a vehicle driver, e.g. a vehicle driver, from speeding at selected positions. Minimum limits may be advantageous when wanting to prevent a vehicle driver from an accidental engine stop by imparting to little throttle for example. It may be that the vehicle driver has found that at a specific section of a route, i.e. at a selected position, the vehicle requires a minimum level of suspension pressure due to the character of the road. As is understood, different combinations of maximum and minimum limits are possible. It is possible to have combinations of one or more maximum limits and one or more minimum limits or optionally of two or more different maximum limits or two or more different minimum limits for example.

The vehicle parameter can be the vehicle speed and the imposed restriction a maximum vehicle speed limit. This prevents a user form e.g. speeding at positions, such as at a section of a route which has been deemed relevant or even important by the vehicle driver.

The position can be recorded by recording the vehicle GPS position. GPS positioning is simple and effective. It is possible to use other forms of positioning techniques such as triangulation using mobile phone technique, GLONASS, Wi-fi or the like. Positioning can also be used by optical devices which recognize structures and landmarks such as cameras with object identification software.

The imposed restriction can be implemented using a vehicle cruise control system, such as an adaptive cruise control system (ACC). If the imposed restriction is a maximum speed limit, the vehicle cruise control system can be manipulated to brake the vehicle if the vehicle exceeds the maximum speed limit. If the imposed restriction is a maximum and/or minimum limit, then such limit can be sent to the vehicle control system of the vehicle, such as the vehicle cruise control system, permitting a user to freely operate the vehicle between, under or above, such maximum and/or minimum limit, or to simply permit the vehicle cruise control system to keep the vehicle at the selected speed when the vehicle revisits the recorded position.

The imposed restriction can be a suspension specific parameter such as a maximum and/or minimum limit. A dynamic vehicle suspension system can be used to impose the restriction to the vehicles performance by increasing or decreasing the suspension pressure. It could be implemented using the vehicle height adjustable suspension system to vary the ride height or ground clearance at recorded positions. The vehicle driver may want to lower the ground clearance on a highway to lower the fuel consumption for example. When referring to the suspension pressure it is generally meant the air or oil pressure for the "springs" of the vehicle.

The imposed restriction to the vehicle can be automatically implemented when the vehicle moves at, or substantially at, the recorded position. In some cases it may be desirable to provide a device with an activation/deactivation function. The activation/deactivation function can be geographically triggered so that the restriction is imposed at specific geographical positions, such as a recorded geographical position. When a vehicle driver passes the same position or substantially the same position a second time, the imposed restriction can automatically be activated. As such a user does not need to manually activate or deactivate the vehicle performance control device once it has been turned on.

The vehicle parameter can be manually or automatically manipulated before the restrictions are imposed on the vehicle. A vehicle driver, or e.g. a fleet owner, can manipulate the recorded data using a mobile phone application and thereafter upload the manipulated data to the storage unit e.g. to the vehicle or to a remote storage position. It has been found that it can be very useful if the vehicle driver can manipulate the recorded data for many reasons. It may be that the vehicle driver when recording the data has unintentionally driven in a manner which was not intended to due to the current traffic situation for example. The vehicle driver may have been required to make a sudden retardation for example. Such "dip" in the vehicle speed may have been recorded and is likely not to be favorable to experience a second time the vehicle driver passes the same position, or substantially the same position, with the vehicle again. Hence a vehicle driver can erase such dips or peaks from the recorded data e.g. using the vehicle performance control device, a computer or a mobile phone.

According to a second aspect, the present invention also relates to a vehicle performance control device. The vehicle performance control device comprises a recording unit adapted to record the vehicle position and at least one vehicle parameter. The vehicle performance control device is configured to impose a restriction on the vehicle performance when driving the vehicle at, or substantially at, the recorded position using the at least one recorded vehicle parameter. The vehicle performance control device can be connected or communicating with a vehicle cruise control system or with an on board vehicle computer for example. The vehicle performance control device can be connected to the vehicle cruise control system to impose the restriction on the vehicle performance as a function of the recorded vehicle position and the at least one recorded vehicle parameter. The vehicle performance control device may be provided with its own CPU or it can use the vehicle on-board computer for communication with the vehicle and the relevant vehicle systems.

The present invention also relates to a computer readable storage medium comprising an algorithm for implementing the method according to any one of the appended claims, or as described herein.

In general terms, the present invention relates to a method for controlling a vehicles performance, a vehicle performance control device, and a computer readable medium comprising an algorithm for implementing the method. The method and device relates to recording a vehicles position and at least one vehicle parameter when the vehicle is moving and imposing a restriction on the vehicles performance when subsequently driving the vehicle at, or substantially at, the recorded position using the at least one recorded vehicle parameter. The method and device permits a vehicle driver to record data and subsequently use that data to impose restrictions to the vehicle performance when revisiting the geographical position at which the data was recorded

### BRIEF DESCRIPTION OF THE DRAWINGS

Non-limiting embodiments will be described in greater detail hereafter with reference to the accompanying drawings in which;
figure 1 shows a schematic view of a vehicle travelling on a route;
figure 2 shows a measured vehicle speed and an imposed maximum speed on the vehicle;
figure 3 shows a schematic illustration of a human machine interface suitable for the vehicle performance control device and;
figure 4 shows a combined illustration of figure 1 and figure 2.

### DETAILED DESCRIPTION OF PREFERRED EMBODIMENTS

A method for controlling a vehicle's performance when driving provides for additional safety on selected sections on a route such as important stretches where a vehicle driver thinks that e.g. a speed limitation may be of importance such as in sharp curves, at low-speed zones e.g. near schools or in conjunction with warning signs to prevent a sudden retardation. The vehicle can be provided with a vehicle performance control device comprising a recording unit for recording at least one vehicle parameter and the vehicle position. It can optionally be provided with a local storage unit and/or a send/receive unit for sending and/or receiving data from a remote location. The send/receive unit can be adapted to communicate with a remote server, one or more vehicles, or a cloud based memory base for example. The mentioned unit can form a part of a vehicle cruise control system, or be arranged to complement an existing vehicle cruise control system of the vehicle.

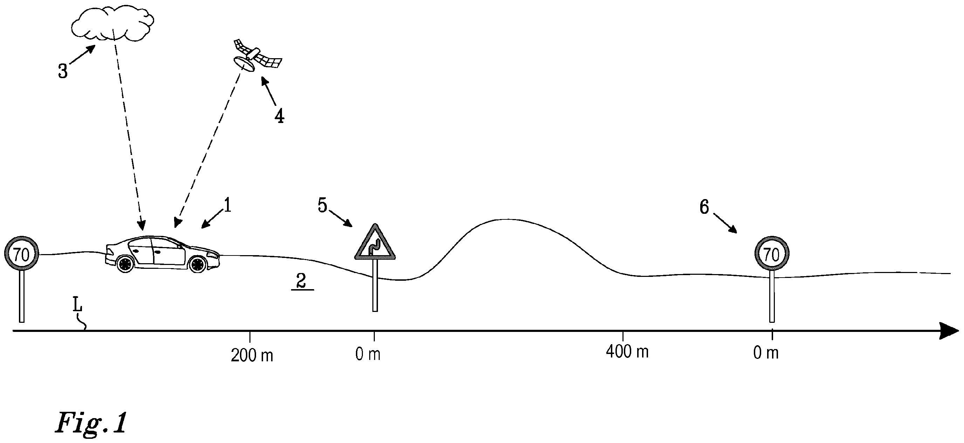

The methodology will now be described with reference to a non-limiting embodiment. Figure 1 shows a schematic view of a vehicle 1 driving on a route 2. The vehicle 1 can be an automobile, such as a car, a recreational van, a truck, or a lorry, but the present invention could also be used on vehicles such as boats, helicopters, aero planes or the like. Preferred vehicles are automobiles. The vehicle 1 can be a vehicle adapted to be driven by a vehicle driver, a partly autonomous vehicle adapted to be driven by a vehicle driver or a vehicle which can be temporarily autonomous or a fully autonomous vehicle having no vehicle driver. The vehicle can be a remotely driven vehicle if desirable.

Figure 1 further shows a database 3, in this case a cloud database 3 with information about road signs and/or road characteristics, a satellite 4 representative of communication satellites and the corresponding parts of a global positioning system (GPS) and a first and a second traffic sign 5, 6. Figure 1 also shows a distance line L approximately indicating the distance between the front of the vehicle 1 and the first traffic sign 5.

At least one vehicle parameter, in this case the vehicle speed, is recorded when the vehicle 1 is moving on a section of the route 2. The vehicle parameter forms a driving profile together with the vehicles recorded position. The route 2 is further illustrated by the length of the distance line L as shown in figure 1. The recorded vehicle speed can thereafter be used by the vehicle driver to impose one or more restrictions on the vehicle 1 and more precisely on the vehicle's performance.

For example the recorded vehicle speed can be used to set a maximum speed limit for the vehicle 1 as will be described below. When a vehicle driver revisits the position, the method and device can automatically prevent the vehicle 1 from speeding with respect to the vehicle speed which the vehicle driver has recorded earlier. This can prevent a vehicle driver from the urge to suddenly retardate the vehicle 1 when the vehicle driver sees the first traffic sign 5. Hence it can thus effectively prevent accidents between vehicles as it can remove sudden retardations.

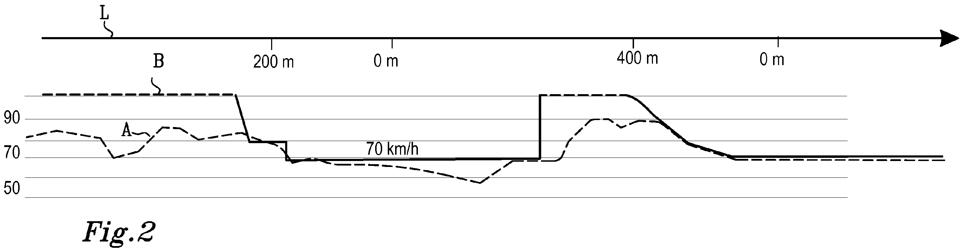

Figure 2 shows a first and a second graph A, B, representative for the vehicle speed and the set permitted maximum speed of the vehicle also referred to as the maximum speed limit of the vehicle. The graphs of figure 2 correlate the recorded position of the vehicle 1 on the route 2 with the imposed maximum speed limit and the speed of the vehicle 1.

The dashed line A shows the vehicle speed as the vehicle moves the distance L, i.e. through a section of the route 2. The horizontal lines represent different speeds. The dashed line A is thus illustrated as a graph in a speed/position diagram. It should be noted that the dashed line A shows the actual speed of the vehicle 1 as it travels cross the section of the route, and not the actual recorded values of the vehicle speed.

As the vehicle speed is recorded with respect to its position, either relative or actual, it forms a vehicle speed profile. In general terms when a vehicle parameter is recorded it is referred to as a driving profile.

The line B, which is sometimes dashed and sometimes full, illustrates the imposed restriction on the vehicle's performance. In this case the imposed restriction is a maximum speed limit, which the vehicle is permitted to travel. It can optionally operate as a preset speed at which the vehicle can travel in, thus operating as a vehicle cruise control but without the need for the vehicle driver to manually change the speed at different geographical positions. The vehicle speed can thus be limited or regulated by the vehicle cruise control system based on the recordings. In the same manner as above, the line B is illustrated as a graph in the same speed/position diagram as the dashed line A. In the sections in which the line B is dashed the speed limit is inactive, and in the section in which the line B is full, the speed limit is active.

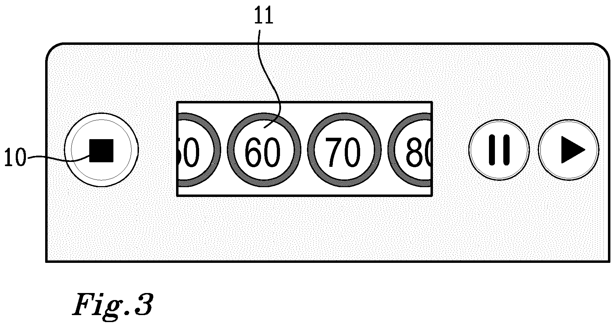

Figure 3 shows a suitable human machine interface (HMI) for the vehicle performance control device, in this case on a touch sensitive display device. When a vehicle driver approaches a section on a route for the first time having a point of interest, in this case the traffic sign 5 which is illustrated as a speed limit sign, the vehicle driver record how he/she drives when passing the point of interest by pressing the record/stop button 10 on the human machine interface (HMI). The HMI enables the vehicle driver to easily start and stop recording, or it can permit the vehicle driver to manually select a suitable speed limit e.g. by pressing one of the speed limit signs 11 on the HMI. It can further enable a vehicle driver to delete or overwrite previously recorded data such as a previously recorded maximum and/or minimum speed limit. The vehicle driver can also turn the function on/off and optionally override the function with a throttle, clutch or brake kick-down. The vehicle driver can thus define a maximum speed limit of the vehicle by manually setting the maximum speed limit to e.g. 70 km/h and record the vehicles positon in the conjunction with of a point of interest.

Once the recording is initiated, the recording unit starts to record one or more selected vehicle parameters such as the vehicle speed, revolutions/min, selected gear, GPS position and the like. In the shown example the vehicle speed and the GPS position are recorded. Once the vehicle driver is satisfied that the point of interest has been passed, the vehicle driver can stop the recording by pressing a record/stop button 10. The recording unit could optionally stop recording at a preset parameter such as after a specified period of time, after a specified travelled distance, or at specified position or geographical place, by way of example only; after 1 minute, after 10-500 meters, passing a road intersection, when passing a traffic sign, or a selected city or any other selected map position.

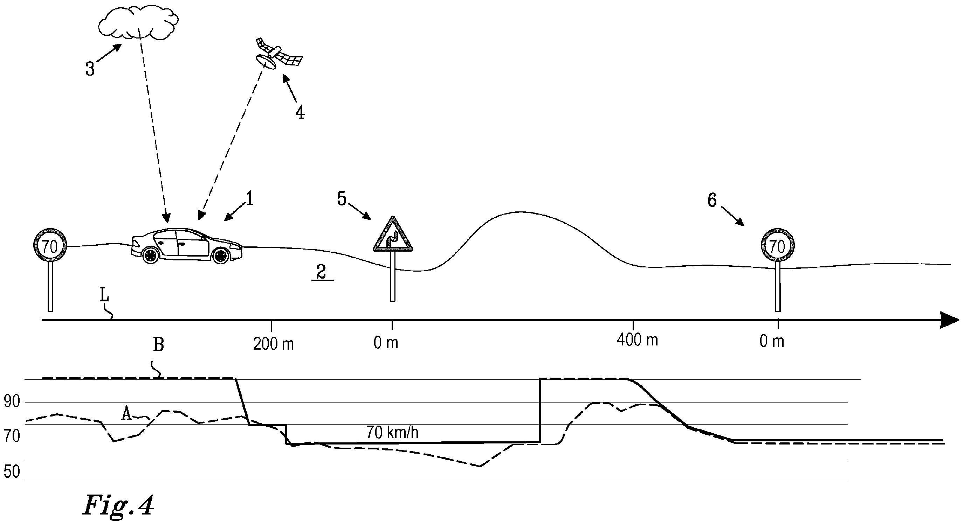

Figure 4 illustrates the vehicle parameters and the vehicle 1 when the vehicle driver has passed the same section of the route a second time with the vehicle performance control device activated in selected sections. The dashed line A shows the actual speed of the vehicle and the dashed line B shows the vehicle performance control device inactivated and the full line B represents the vehicle performance control device activated. When the vehicle 1 is about 200 meters from the traffic sign 5 representative of a road section with sharp curves, the vehicle performance control device automatically activates the speed limiting function of the vehicle cruise control system. The vehicle cruise control system gradually decreases the maximum speed limit by first introducing the vehicle speed limit of 100 km/h. Subsequently thereafter, the vehicle performance control device reduces the maximum speed limit to 80 km/h and thereafter sets the maximum speed limit to 70 km/h which is considered a safe speed on the specific road section with sharp curves. As the maximum speed limit is gradually decreased and automatically introduced, sudden retardations due to surprised vehicle drivers are prevented and sudden brake related accidents as well as speed related accidents can be avoided.

Once the vehicle 1 has passed the point of interest, in this case the road section with sharp curves, the vehicle performance control device is disabled, i.e. deactivated, and the vehicle driver can set the speed of the vehicle 1 manually again. Optionally the status of the vehicle cruise control system is restored to the earlier set value before the vehicle performance control device was activated. Hence, this method and device can operate together with a regular vehicle cruise control and would be a valuable complement thereto. A several hundred meters downstream of the first traffic sign 5 is a second point of interest, in this case the second traffic sign 6 in this case representative of a speed limit. Once again the vehicle performance control device is automatically activated and the maximum speed limit is gradually decreased to the permitted 70 km/h as can be seen by the dashed line A and the full line B.

In the above example, the vehicle performance control device sets a maximum speed limit. In practice this means that the vehicle driver is free to drive the vehicle as he/she sees fit by accelerating and retarding the vehicle 1 but is prevented from exceeding the maximum speed limit which in the shown example is set to the 70 km/h just before the points of interests, in this case the first and the second traffic signs 5, 6.

The vehicle performance control device could however set a vehicle speed, similar to a vehicle cruise control system, or set a permitted speed interval e.g. setting a permitted minimum and permitted maximum speed. Such speed interval could be 10-70 km/h, 10-50 km/h or 10-30 km/h for example. Speed intervals are useful to prevent the vehicle from stopping e.g. due to the vehicle driver not imparting enough gas via the throttle of the vehicle.

The vehicle performance control device can be inactivated when the vehicle driver presses the inactivation/activation button and/or if the vehicle driver presses the clutch, the brake or the throttle with a predetermined pressure or a predetermined distance. One way to deactivate the vehicle performance control device can be by a so called kick-down, i.e. pushing the throttle to the bottom.

As mentioned above, the method is illustrated with a traffic sign as a point of interest. However a point of interest could be temporarily road work, a low speed area such as a road section in front of a school or a hospital, portions on a road having limited visibility, sharp turns, specific road crossings, traffic information displaying devices, traffic information collecting devices or the like. A point of interest could also be a long or a short section of high-way for example.

The recordings can be made continuously or intermittently e.g. with one or more seconds between each measurement. It should be noted that all measurements with more than 10 recorded data entries per second is considered to be a continuous measurement. The recorded data can be stored locally in the vehicle on a storage unit such as a hard drive and/or be stored remotely in a cloud memory data base or at a selected storage server for later retrieval.

The vehicle performance control device can be provided with a communication unit. The communication unit can enable a vehicle driver to remotely access the vehicle performance control device and/or the locally or remotely stored data which the vehicle performance control device uses. The vehicle driver can by this add vehicle performance restrictions such as speed limit road sections from external databases such as low-speed areas, real-time traffic data (accidents, icy roads), and the vehicles user's own customized recorded data edited on home computer and downloaded to the car. The vehicle driver, or any other selected user, can also manipulate a recorded driving profile. The driving profile may need some adjustments before being used by the vehicle performance control device. Such adjustments could be erasing individual speed peaks or speed dips for example. The adjustments can be made automatically by a computer or manually by a user e.g. by the vehicle driver through a mobile phone application for example.

The vehicle performance control device may work in the background, independent of the other vehicle systems such as the vehicle cruise control, ACC, traffic jam assist system (TJA) etc. Normally, there will not be a HMI visible, except when recording, programming, setting speed limit and during the road sections of which there is a speed limit set e.g. for being able to delete or disable the vehicle performance control device.

It is described above how the vehicle position and the vehicle speed are recorded. It should be noted that other vehicle parameters than speed may be selected and recorded such as revolutions/min, current gear, outgoing engine torque, suspension specific parameters such as suspension pressure, suspension compression distance, steering wheel angle, or combinations thereof. All these parameters may be the subject of an imposed restriction on the vehicle. The imposed restriction can thus be a maximum and/or minimum value, such as a maximum and/or minimum speed limit, a maximum and/or minimum revolutions/min, a maximum and/or minimum available engine torque, a maximum and/or minimum suspension pressure, a maximum and/or minimum steering wheel angle, or combinations thereof.

## Claims

1. Method for controlling a vehicles (1) performance when driving using a vehicle performance control device, said method comprising the steps of;
- recording by means of a recording unit comprised in said vehicle performance control device a vehicles (1) position and at least one vehicle parameter when said vehicle (1) is moving (L);
- imposing a restriction on a vehicles performance when subsequently driving said vehicle (1) at, or substantially at, said recorded position using said at least one recorded vehicle parameter,
wherein said vehicle position and said at least one vehicle parameter are recorded by a vehicle driver driving said vehicle (1), a human machine interface for said vehicle performance control device enabling said vehicle driver to start and stop recording.

2. The method according to claim 1, wherein said recording is a continuous recording of said vehicles (1) position and/or said at least one vehicle parameter.

3. The method according to any one of the preceding claims, wherein said vehicle parameter is selected from the list of; speed, revolutions/min, outgoing engine torque, suspension specific parameter, steering wheel angle, acceleration level, retardation level, or combinations thereof.

4. The method according to any one of the preceding claims, wherein said imposed restriction on said vehicle performance is a maximum and/or minimum limit, such as a maximum and/or minimum speed, a maximum and/or minimum revolutions /min, a maximum and/or minimum outgoing engine torque, a maximum and/or minimum suspension specific parameter, a maximum and/or minimum steering wheel angle, or combinations thereof.

5. The method according to claim 4, wherein said vehicle parameter is the vehicle speed and in that said imposed restriction is a maximum vehicle speed limit.

6. The method according to any one of the preceding claims, wherein said recorded position is recorded by recording the vehicle GPS position.

7. The method according to any one of the preceding claims, wherein said imposed restriction is implemented using a vehicle cruise control system of said vehicle.

8. The method according to any one of the preceding claims, wherein said imposed restriction to said vehicle (1) is automatically implemented when said vehicle (1) moves at, or substantially at, said recorded position.

9. The method according to any one of the preceding claims, wherein said vehicle parameter is manually or automatically manipulated before said restriction is imposed on said vehicle.

10. The method according to any one of the preceding claims, wherein said vehicle's position and said at least one vehicle parameter can be selectively recorded at will and can be applied at will at selected positions using said vehicle performance control device.

11. A vehicle performance control device comprising a recording unit operable by a driver and adapted to record the vehicle position and at least one vehicle parameter, a human machine interface for said vehicle performance control device enabling said vehicle driver to start and stop recording, said vehicle performance control device being configured to impose a restriction on the vehicle performance when subsequently driving the vehicle at, or substantially at, the recorded position using the at least one recorded vehicle parameter.

12. The vehicle performance control device according to claim 11, wherein said vehicle performance control device forms a part of a vehicle cruise control system to impose said restriction on the vehicle performance when subsequently driving the vehicle at, or substantially at, the recorded position using the at least one recorded vehicle parameter.

13. A vehicle comprising the vehicle performance control device according to claim 11 or 12.

14. A computer readable storage medium comprising an algorithm for implementing said method according to any one of the claims 1-10.

## Patentansprüche

1. Verfahren zum Steuern der Leistung eines Fahrzeugs (1), wenn es unter Verwendung einer Fahrzeugleistungssteuereinrichtung fährt, wobei das Verfahren die folgenden Schritte umfasst:
- Aufzeichnen mittels einer Aufzeichnungseinheit, die in der Fahrzeugleistungssteuereinrichtung enthalten ist, der Position eines Fahrzeugs (1) und mindestens eines Fahrzeugparameters, wenn sich das Fahrzeug (1) bewegt (L); und
- Auferlegen einer Beschränkung der Leistung eines Fahrzeugs, wenn das Fahrzeug (1) anschließend bei oder im Wesentlichen bei der aufgezeichneten Position unter Verwendung des mindestens einen aufgezeichneten Fahrzeugparameters gefahren wird, wobei
die Fahrzeugposition und der mindestens eine Fahrzeugparameter durch einen Fahrzeugführer, der das Fahrzeug (1) fährt, aufgezeichnet werden, wobei eine Mensch-Maschine-Schnittstelle für die Fahrzeugleistungssteuereinrichtung dem Fahrzeugführer ermöglicht, die Aufzeichnung zu starten und zu stoppen.

2. Verfahren nach Anspruch 1, wobei die Aufzeichnung eine kontinuierliche Aufzeichnung der Position des Fahrzeugs (1) und/oder des mindestens einen Fahrzeugparameters ist.

3. Verfahren nach einem der vorhergehenden Ansprüche, wobei der Fahrzeugparameter aus der folgenden Liste gewählt ist: eine Geschwindigkeit, eine Umdrehungszahl/min, ein Kraftmaschinenausgangsdrehmoment, ein aufhängungsspezifischer Parameter, ein Lenkradwinkel, ein Beschleunigungsgrad, ein Verzögerungsgrad oder Kombinationen davon.

4. Verfahren nach einem der vorhergehenden Ansprüche, wobei die der Leistung des Fahrzeugs auferlegte Beschränkung eine maximale und/oder minimale Grenze ist wie z. B. eine maximale und/oder minimale Geschwindigkeit, eine maximale und/oder minimale Umdrehungszahl/min, ein maximales und/oder minimales Kraftmaschinenausgangsdrehmoment, ein maximaler und/oder minimaler aufhängungsspezifischer Parameter, ein maximaler und/oder minimaler Lenkradwinkel oder Kombinationen davon.

5. Verfahren nach Anspruch 4, wobei der Fahrzeugparameter die Fahrzeuggeschwindigkeit ist und die auferlegte Beschränkung eine maximale Fahrzeuggeschwindigkeitsgrenze ist.

6. Verfahren nach einem der vorhergehenden Ansprüche, wobei die aufgezeichnete Position durch Aufzeichnen der Fahrzeug-GPS-Position aufgezeichnet wird.

7. Verfahren nach einem der vorhergehenden Ansprüche, wobei die auferlegte Beschränkung unter Verwendung eines Fahrzeuggeschwindigkeitsregelungssystems des Fahrzeugs implementiert wird.

8. Verfahren nach einem der vorhergehenden Ansprüche, wobei die dem Fahrzeug (1) auferlegte Beschränkung automatisch implementiert wird, wenn sich das Fahrzeug (1) bei oder im Wesentlichen bei der aufgezeichneten Position bewegt.

9. Verfahren nach einem der vorhergehenden Ansprüche, wobei der Fahrzeugparameter manuell oder automatisch manipuliert wird, bevor dem Fahrzeug die Beschränkung auferlegt wird.

10. Verfahren nach einem der vorhergehenden Ansprüche, wobei die Position des Fahrzeugs und der mindestens eine Fahrzeugparameter wahlweise nach Belieben aufgezeichnet werden können und bei ausgewählten Positionen unter Verwendung der Fahrzeugleistungssteuereinrichtung nach Belieben angewendet werden können.

11. Fahrzeugleistungssteuereinrichtung, die eine Aufzeichnungseinheit umfasst, die durch einen Fahrer betreibbar ist und ausgelegt ist, die Fahrzeugposition und mindestens einen Fahrzeugparameter aufzuzeichnen, wobei eine Mensch-Maschine-Schnittstelle für die Fahrzeugleistungssteuereinrichtung dem Fahrzeugführer ermöglicht, die Aufzeichnung zu starten und zu stoppen, und die Fahrzeugleistungssteuereinrichtung konfiguriert ist, der Fahrzeugleistung eine Beschränkung aufzuerlegen, wenn das Fahrzeug anschließend bei oder im Wesentlichen bei der aufgezeichneten Position unter Verwendung des mindestens einen aufgezeichneten Fahrzeugparameters gefahren wird.

12. Fahrzeugleistungssteuereinrichtung nach Anspruch 11, wobei die Fahrzeugleistungssteuereinrichtung einen Teil eines Fahrzeuggeschwindigkeitsregelungssystems des Fahrzeugs bildet, um der Fahrzeugleistung die Beschränkung aufzuerlegen, wenn das Fahrzeug anschließend bei oder im Wesentlichen bei der aufgezeichneten Position unter Verwendung des mindestens einen aufgezeichneten Fahrzeugparameters gefahren wird.

13. Fahrzeug, das die Fahrzeugleistungssteuereinrichtung nach Anspruch 11 oder 12 umfasst.

14. Computerlesbares Speichermedium, das einen Algorithmus zum Implementieren des Verfahrens nach einem der Ansprüche 1-10 umfasst.

## Revendications

1. Procédé de commande des performances d'un véhicule (1) lors d'une conduite à l'aide d'un dispositif de commande de performances de véhicule, ledit procédé comprenant les étapes suivantes :
- enregistrement, au moyen d'une unité d'enregistrement contenue dans ledit dispositif de commande de performances de véhicule, d'une position du véhicule (1) et d'au moins un paramètre de véhicule lorsque ledit véhicule (1) est en mouvement (L) ;
- imposition d'une restriction sur les performances du véhicule lors d'une conduite subséquente dudit véhicule (1) à, ou sensiblement à, ladite position enregistrée à l'aide dudit au moins un paramètre de véhicule enregistré,
ladite position du véhicule et ledit au moins un paramètre de véhicule étant enregistrés par un conducteur de véhicule conduisant ledit véhicule (1), une interface homme-machine pour ledit dispositif de commande de performances de véhicule permettant audit conducteur de véhicule de lancer et d'interrompre l'enregistrement.

2. Procédé selon la revendication 1, dans lequel ledit enregistrement est un enregistrement continu de ladite position du véhicule (1) et/ou dudit au moins un paramètre de véhicule.

3. Procédé selon l'une quelconque des revendications précédentes, dans lequel ledit paramètre de véhicule est sélectionné dans la liste comprenant : une vitesse, un régime en tours/min, un couple moteur de sortie, un paramètre propre à la suspension, un angle de volant de direction, un niveau d'accélération, un niveau de ralentissement, ou des combinaisons de ceux-ci.

4. Procédé selon l'une quelconque des revendications précédentes, dans lequel ladite restriction imposée sur lesdites performances du véhicule consiste en une limite maximale et/ou minimale, telle qu'une vitesse maximale et/ou minimale, un régime en tours/min maximal et/ou minimal, un couple moteur de sortie maximal et/ou minimal, un paramètre propre à la suspension maximal et/ou minimal, un angle de volant de direction maximal et/ou minimal, ou des combinaisons de ceux-ci.

5. Procédé selon la revendication 4, dans lequel ledit paramètre de véhicule consiste en la vitesse de véhicule, et ladite restriction imposée consiste en une limite de vitesse de véhicule maximale.

6. Procédé selon l'une quelconque des revendications précédentes, dans lequel ladite position enregistrée est enregistrée par enregistrement de la position GPS du véhicule.

7. Procédé selon l'une quelconque des revendications précédentes, dans lequel ladite restriction imposée est mise en œuvre à l'aide d'un système régulateur automatique de vitesse de véhicule dudit véhicule.

8. Procédé selon l'une quelconque des revendications précédentes, dans lequel ladite restriction imposée audit véhicule (1) est mise en œuvre automatiquement lorsque ledit véhicule (1) est en mouvement à, ou sensiblement à, ladite position enregistrée.

9. Procédé selon l'une quelconque des revendications précédentes, dans lequel ledit paramètre de véhicule est manipulé manuellement ou automatiquement avant l'imposition de ladite restriction sur ledit véhicule.

10. Procédé selon l'une quelconque des revendications précédentes, dans lequel la position dudit véhicule et ledit au moins un paramètre de véhicule sont enregistrables sélectivement à volonté et sont applicables à volonté à des positions sélectionnées à l'aide dudit dispositif de commande de performances de véhicule.

11. Dispositif de commande de performances de véhicule, comprenant une unité d'enregistrement utilisable par un conducteur et adaptée à enregistrer la position de véhicule et au moins un paramètre de véhicule, une interface homme-machine pour ledit dispositif de commande de performances de véhicule permettant audit conducteur de véhicule de lancer et d'interrompre l'enregistrement, ledit dispositif de commande de performances de véhicule étant configuré pour imposer une restriction sur les performances de véhicule lors d'une conduite subséquente du véhicule à, ou sensiblement à, ladite position enregistrée à l'aide de l'au moins un paramètre de véhicule enregistré.

12. Dispositif de commande de performances de véhicule selon la revendication 11, lequel dispositif de commande de performances de véhicule fait partie d'un système régulateur automatique de vitesse de véhicule pour imposer ladite restriction sur les performances de véhicule lors d'une conduite subséquente du véhicule à, ou sensiblement à, la position enregistrée à l'aide de l'au moins un paramètre de véhicule enregistré.

13. Véhicule comprenant le dispositif de commande de performances de véhicule selon la revendication 11 ou 12.

14. Support de stockage lisible par ordinateur comprenant un algorithme permettant la mise en œuvre dudit procédé selon l'une quelconque des revendications 1 à 10.
